# EUROPEAN PATENT APPLICATION

(11) **EP 2 375 069 A1**
(43) Date of publication of application: **12.10.2011**
(21) Application number: 09834705.7
(22) Date of filing: 08.12.2009
(51) Int. Cl.: F03G 7/06, G02B 7/04, G02B 7/08, H02N 10/00

(54) **SHAPE MEMORY ALLOY ACTUATOR DRIVE DEVICE AND METHOD, AND IMAGING DEVICE USING SAME**

(30) Priority: 24.12.2008 JP 2008327146
(71) Applicant: Konica Minolta Opto, Inc., Hachioji-shi Tokyo 192-8505 (JP)
(72) Inventor: HONDA, Yasuhiro, Hino-shi Tokyo 191-8511 (JP); MIKI, Nobuya, Hino-shi Tokyo 191-8511 (JP)
(74) Representative: HOFFMANN EITLE
(86) International application number: PCT/JP2009/070517
(87) International publication number: WO 2010/073902

(57) **Abstract**

A driving circuit (21) of a shape memory alloy actuator of the present invention measures by a measurement part a parameter value corresponding to a target position of a moving part that is displaced by being driven on account of the expansion and contraction of an SMA (15), which expands and contracts with temperature changes and which exhibits hysteresis in a parameter-distortion characteristic relating to the expansion and contraction, while the temperature of the SMA (15) is being raised or lowered. The driving circuit (21) sets the measured parameter value as a target parameter. The temperature of the SMA (15) is raised or lowered such that the parameter value measured by the measurement part passes the target parameter, before the crystal phase of the SMA (15) becomes a martensitic phase. Thereafter, the temperature of the SMA (15) is raised or lowered again such that the parameter value measured by the measurement part reaches the target parameter.

## Description

### Technical Field

The present invention relates to a drive device and method that are appropriately used, for instance, in comparatively small imaging devices provided in camera-equipped cell phones, for driving a shape memory alloy actuator in order to adjust focus, zoom and so forth of a lens unit forming an imaging optical system, and relates to an imaging device that uses the drive device and method.

### Background Art

Image quality in imaging elements installed in camera-equipped cell phones or the like has improved steadily in recent years as a result of, for instance, dramatic increases in number of pixels. At the same time, ever higher performance is demanded from lens units that are comprised in imaging optical systems. Specifically, autofocus schemes are required instead of fixed focal point schemes. As regards zoom performance, optical zoom is now required as a substitute, or supplement, of digital zoom. Both autofocus and optical zoom require an actuator that moves a lens in the optical axis direction.

There are known devices that use shape memory alloys (hereafter, also referred to as SMA) as such actuators. In such devices, a tightening force is elicited in the SMA through ohmic heating. This tightening force is used as a lens driving force that drives a lens. Usually, such a configuration, which is also comparatively powerful, is advantageous on account of the afforded miniaturization and weight reduction.

Ordinarily, however, shape memory alloys exhibit hysteresis in a temperature - distortion characteristic , and the extent of distortion with respect to temperature is dissimilar between a temperature-raising process (heating process) and a temperature-lowering process (heat release process). In the case of camera autofocus, the focus lens shifts (heating) from a state in a home position (far end) in which impacts or the like can be coped with (i.e. a state where the SMA is in a martensitic phase (low-temperature phase)) and a state at a temporary sweeping end (near end) (i.e. a state where the SMA is in an austenitic phase (high-temperature phase)). A focus point is detected through, for instance, detection of an edge at which contrast increases, on the basis of the output of an image sensor during the time at which the focus lens is shifting. After sweeping, the focus lens is positioned at the focus point. If the SMA exhibits the above-mentioned hysteresis in a temperature - distortion characteristic, therefore, the hysteresis curve in a sweep (heating) from the far end to the near end is different from the hysteresis curve in a return (heat release) from the near end to the focus point). As a result, the focus lens stops in front of the target position (i.e. does not return fully) when, during return, the control part controls the energization of the SMA in such a manner that the SMA temperature is brought to the temperature that is read during detection of the focus point.

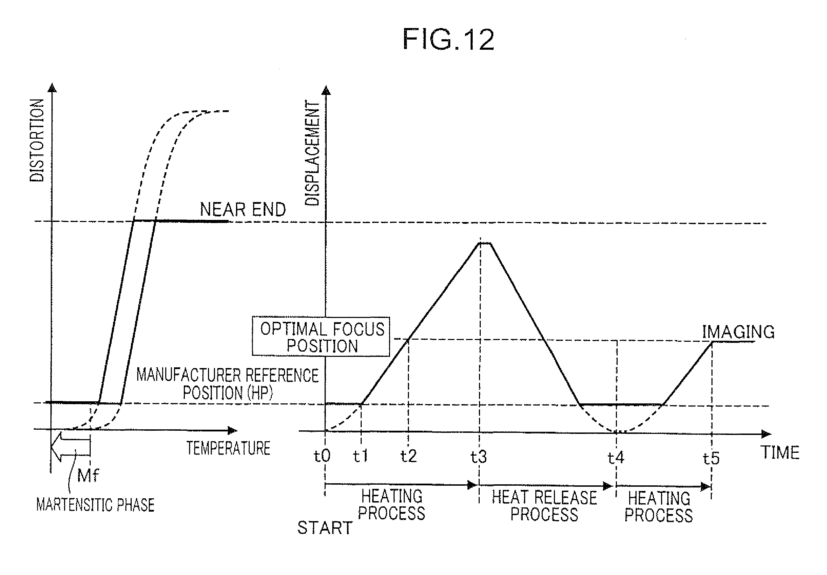

To cope with the above problem, control is carried out in Patent document 1 so as to temporarily return the crystal phase in a shape memory alloy to a martensitic phase (low-temperature phase), as illustrated in Fig. 12. That is, control is performed such that heat release takes place in the entirety of the shape memory alloy, regardless of the target position (focus point). In other words, control is carried out such that the focus lens returns temporarily up to a home position (far end) at which the crystal phase is a martensitic phase (low-temperature phase), and then the focus lens is caused to reach again a target displacement (focus point) through a heating process of the shape memory alloy.

In the above-described conventional technology, the focus lens is caused to move to a target position (focus point) through a heating process that is identical to the heating process at the time of sweeping (focus point search). Therefore, it becomes possible to realize accurate position control. However, substantial heat release time is required in order to return to the martensitic phase. It takes also time to reach again the target position (focus point).

Patent document 1: WO 07/113478

### Summary of the Invention

In order to solve the above issues, it is an object of the present invention to provide a shape memory alloy actuator drive device and method that allow realizing accurate position control in a shorter time, and to provide an imaging device that uses the shape memory alloy actuator drive device and method.

The shape memory alloy actuator drive device and method and imaging device using the same according to the present invention are suitably used in cases where a shape memory alloy expands and contracts with changes in temperature and exhibits hysteresis in a parameter-distortion characteristic relating to that expansion and contraction, in that: while the temperature of the shape memory alloy is being raised or lowered, there is measured a parameter value corresponding to a target position of a moving part that is displaced by being driven on account of the expansion and contraction of the shape memory alloy, and the measured parameter value is set as a target parameter; the temperature of the shape memory alloy is raised or lowered in such a manner that, before the crystal phase of the shape memory alloy becomes a martensitic phase, the parameter value measured by the measurement part passes the target parameter; and thereafter, the temperature of the shape memory alloy is raised or lowered again in such a manner that the parameter value measured by the measurement part reaches the target parameter. In a shape memory alloy actuator drive device having the above configuration, therefore, the crystal phase of the shape memory alloy need not return to a martensitic phase. Hence, accurate position control can be realized in a shorter time.

The above and other objects and advantages will become more apparent from the following description and accompanying drawings.

### Brief Description of the Drawings

[Fig. 1] Fig. 1 is a front-view diagram of an autofocus lens driving mechanism of an imaging device according to an embodiment of the present invention;
[Fig. 2] Fig. 2 is a side-view diagram for explaining the operation of the autofocus lens driving mechanism illustrated in Fig. 1;
[Fig. 3] Fig. 3 is a graph illustrating a temperature - distortion characteristic in a shape memory alloy, in an instance of displacement to a target position through a heating process;
[Fig. 4] Fig. 4 is a graph illustrating a temperature - distortion characteristic in a shape memory alloy, in an instance of displacement to a target position through a heat release process;
[Fig. 5] Fig. 5 is a graph illustrating an operation example of an autofocus sequence in an embodiment of the present invention;
[Fig. 6] Fig. 6 is a graph illustrating a displacement - driving current characteristic and a displacement - temperature characteristic in a shape memory alloy, depicting differences in displacement arising from differences in ambient temperature;
[Fig. 7] Fig. 7 is a block diagram of a control circuit, in an embodiment of the present invention, that drives an SMA actuator;
[Fig. 8] Fig. 8 is a flowchart for explaining autofocus control by the control circuit illustrated in Fig. 7;
[Fig. 9] Fig. 9 is a block diagram of a control circuit, in another embodiment of the present invention, that drives an SMA actuator;
[Fig. 10] Fig. 10 is a graph illustrating a displacement - resistance value characteristic and a displacement - temperature characteristic of a shape memory alloy;
[Fig. 11] Fig. 11 is a flowchart for explaining autofocus control by the control circuit illustrated in Fig. 9; and
[Fig. 12] Fig. 12 is a graph illustrating an operation example of a conventional autofocus sequence.

### Modes for Carrying Out the Invention

Embodiments of the present invention are explained below with reference to accompanying drawings. In the drawings, identical features are denoted with identical reference numerals, and an explanation thereof will be omitted as appropriate.

### Embodiment 1

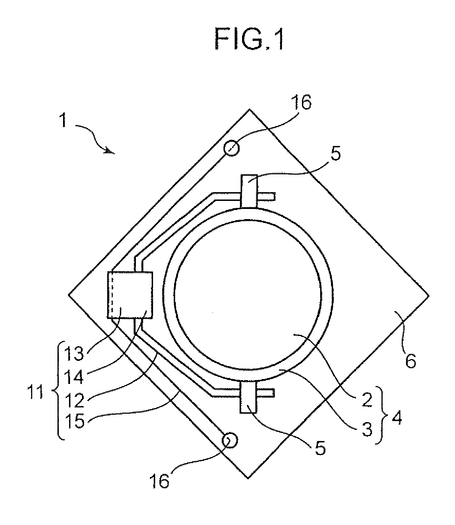

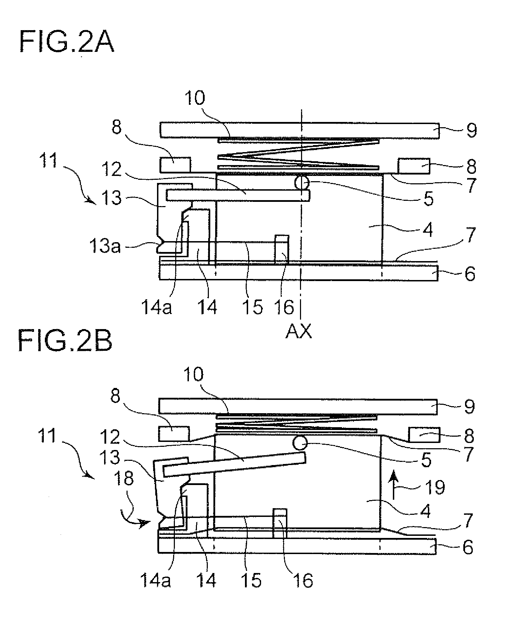

Fig. 1 is a front-view diagram (diagram viewed from a lens aperture plane) of an autofocus lens driving mechanism 1 of an imaging device according to an embodiment of the present invention, and Fig. 2 is a side-view diagram for explaining the operation of the autofocus lens driving mechanism 1. Fig. 2(a) illustrates an instance where an SMA 15 is stretched on account of the spring force of a bias spring 10, and Fig. 2(b) illustrates an instance where the SMA 15 is contracted against the spring force of the bias spring 10. To perform focusing, the driving mechanism 1 displaces a lens 2 in the direction of the axis line AX (front-rear) of the lens 2. A lens barrel 4 comprises the lens 2 and a lens driving frame 3, such that the lens 2 is attached to the lens driving frame 3. A pair of protrusions 5 is formed at the front end (front end in the front-rear direction) of the outer peripheral face of the lens barrel 4. The protrusions 5 are set on an arm 12 of a shape memory alloy actuator 11. Thereby, the lens barrel 4 is displaced in the axis line AX (front/rear) direction.

The lens barrel 4 is placed on a base portion 6; the front and rear ends of the lens driving frame 3 are supported by a base portion 6 and a upper base 8, via a pair of link members 7, such that the lens barrel 4 can be displaced parallelly to the axis line AX (front-rear) direction. The upper base portion 8 is integrally formed with the base portion 6 by way of a horizontal-face outer wall, not shown. The bias spring 10 is interposed between a front cover 9 and the front end of the lens driving frame 3.

The shape memory alloy actuator 11 is provided with the arm 12, a lever 13 and a support pedestal 14, as moving parts, and the SMA 15 that comprises a wire of a shape memory alloy (SMA). The arm 12 is formed to a substantially C-shape, as viewed from the front side (lens aperture), the protrusions 5 are set on both sides of the arm 12, and the central portion of the latter is fixed to one end of the lever 13. The central portion of the lever 13 is supported on a fulcrum 14a of the support pedestal 14 in such a manner that this lever can swing and shift. A cutout 13a is formed at the other end of the lever 13. The SMA 15 is wrapped around the cutout 13a. As a result, the cutout 13a prevents the SMA 15 from being shifting upon displacement of the lens barrel 4 in the axis line AX (front-rear) direction. Both ends of the SMA 15 are laid in a tensioned state by a pair of electrodes 16 that are standingly provided at the base portion 6.

In the above configuration, the SMA 15 releases heat naturally to the surroundings, and is in a martensitic phase (low-temperature phase), at a time where whether no current flows across the electrodes 16. Thus, the SMA 15 generates no tension, and is stretched on account of the spring force of the bias spring 10. Therefore, as illustrated in Fig. 2(a), the lens barrel 4 stands at a home position (far end) pressed against the base portion 6, and can respond to a shock or the like. By contrast, when current flows across the electrodes 16, for instance in a pulsed manner, the SMA 15 generates Joule heat that is greater the higher the duty ratio is. (The current flow amount is increased). The SMA 15 contracts on account of such self-heating, and tension is generated in the SMA 15. The tension in the SMA 15 causes the lever 13 to swing in the direction of arrow 18, as illustrated in Fig. 2(b), against the spring force of the bias spring 10. As a result of this swinging, the lens barrel 4 is pushed out towards the front cover 9, as indicated by arrow 19, by way of the arm 12 and the protrusions 5. In the state of highest duty, the SMA 15 is in an austenitic phase (high-temperature phase), and the lens barrel 4 reaches the sweeping end (near end).

In a lateral view (Fig. 2), the vicinities of inflection points of the L-shaped lever 13 and of the arm 12 are supported on the fulcrum 14a. The distance up to the point in the arm 12 at which the protrusions 5 are locked is longer than the distance up to the point in the lever 13 at which the SMA 15 is locked. As a result, the displacement of the SMA 15 is increased, and the abovementioned tension in the SMA 15 causes the lens barrel 4 to be displaced.

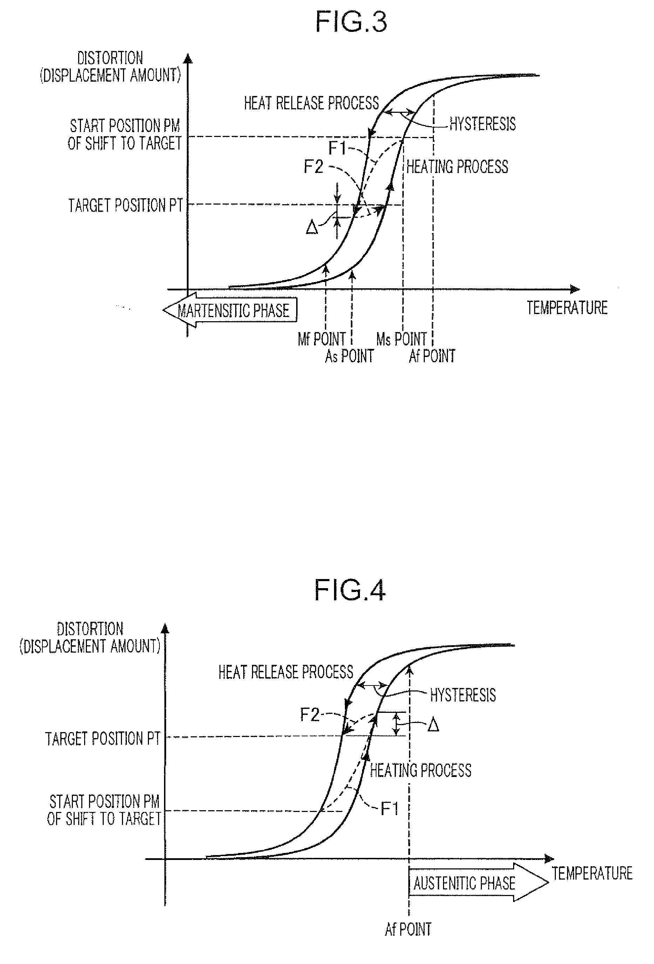

Figs. 3 and 4 are graphs illustrating the temperature - distortion characteristic of an SMA (extent of displacement upon expansion and contraction). When at or below a given temperature, the SMA is in a crystal phase referred to as martensitic phase (low-temperature phase), as indicated by the solid line, and the wire is stretched. As the temperature rises, the SMA follows one branch of a hysteresis loop such that, from a specific temperature (As point), the SMA contracts abruptly, and displacement in the contraction direction increases. As the temperature rises beyond a specific temperature (Af point), contraction of the wire is over, and the SMA enters a crystal phase called an austenitic phase (high-temperature phase). When temperature is lowered from this state, the SMA follows the other branch of the hysteresis loop and, from a specific temperature (Ms point), stretches abruptly, and displacement in the contraction direction decreases. As the temperature drops below a specific temperature (Mf point), stretching of the wire is over, and the SMA returns to a martensitic phase. Ordinarily, the temperature - distortion characteristic of SMAs exhibits hysteresis such as the one illustrated in Figs. 3 and 4, and there holds a relationship: Mf point <As point and Ms point <Af point. On account of this hysteresis, the SMA exhibits dissimilar displacement extents in a heating process and a heat release process, for a same temperature.

In Patent document 1, accordingly, the SMA is controlled so as to be displaced to a target position after the SMA has undergone complete heat release and has returned temporarily to the martensitic phase (low-temperature phase). In a case where the driving mechanism 1 illustrated in Figs. 1 and 2 is used to perform such control, the energization of the SMA 15 starts at time t0, as illustrated in Fig. 12, and the lens barrel 4 starts moving at time t1. Once the lens barrel 4 starts moving (moving away from the home position), there is performed focus evaluation over a plurality of steps, and the resulting evaluation values (focus evaluation values) are stored. In this process, for instance, there is detected a high contrast (edge), as a likely optimal focus position, on the basis of a focus evaluation value acquired at time t2. Thereafter, sweeping is performed over a predefined range, such that sweeping is over at time t3. Determination of an accurate focus position is performed before and after the above-mentioned time t2. Thereafter, the SMA 15 is left to release heat over a sufficient lapse up time, up to time t4, whereby the SMA 15 is caused to revert reliably to a martensitic phase (low-temperature phase). Thereafter, energization starts again, from time t4, so that by time t5, the lens barrel 4 has moved to an accurate focus position, roughly that at the above-mentioned time t2. Thereupon, the temperature at that time is maintained, and imaging is performed.

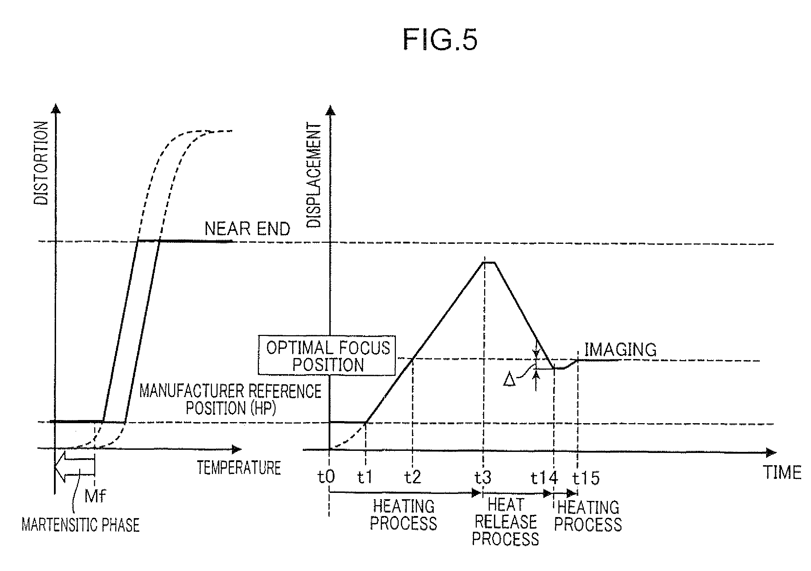

Fig. 12 is a graph illustrating an operation example of a conventional autofocus sequence. In Fig. 12, the left of the figure is a SMA temperature - distortion characteristic, as in Figs. 3 and 4 above. Herein, the range from a manufacturer reference position (the above-described home position) up to the near (macro) end is the operation range, in order to define the motion range by the driving mechanism 1. The right of the figure indicates the change in lens position over the various processes of an autofocus sequence. The abscissa axis is the time axis. The left and right of the figure have been depicted in such a manner that the relationship between distortion and displacement in the ordinate axes match each other. The same is true of Fig. 5 of the present embodiment.

In the present embodiment, by contrast, energization of the SMA 15 starts at time t0, as illustrated in Fig. 5, the lens barrel 4 starts moving at time t1, the optimal focus position is detected at time t2, and sweeping is over at time t3. The heating process from time t0 to time t3 is identical to that of Fig. 12 described above. In the heat release process that starts from time t3 in the present embodiment, a heating process starts again, through an increase in the energization current value of the SMA 15, from time t14 at which the optimal focus position has been overshot by a predefined value Δ, and the autofocus process is over upon reaching the optimal focus position at time t15, whereupon imaging is carried out.

More specifically, returning to Fig. 3, the figure illustrates a control operation wherein there is decided a given target position PT of the heating process that constitutes one branch of a hysteresis loop; thereafter, the lens barrel 4 is brought back through a heat release process that constitutes the other branch of the hysteresis loop; is returned to the target position PT, in a heated state, and is re-positioned again. As indicated by the broken line, a heat release process denoted by the reference numeral F1 takes place , to return from the shift start position (sweep stop position) PM to the target position PT. Herein, however, the SMA 15 is controlled to a temperature lower than the temperature that corresponds to the target position PT of the heat release process by the predefined value Δ that is based on the above-described hysteresis characteristic of temperature - distortion that is learned beforehand. Thus, after the heat release process has temporarily overshot the target position PT, the SMA 15 is controlled once more by way of a heating process, to reach a temperature corresponding to the target position PT, as indicated by the reference numeral F2. As a result, the driving mechanism 1 can accurately bring the lens position to the target position.

Similarly, Fig. 4 illustrates an operation that involves deciding a given target position PT in a heat release process, and performing control thereafter so as to return to the target position, in a heat released state. Although the heating and heat release relationship in Fig. 4 is inverted with respect to that of Fig. 3, the driving mechanism 1 can accurately bring the lens position to the target position PT in accordance with the same control method as that of Fig. 3.

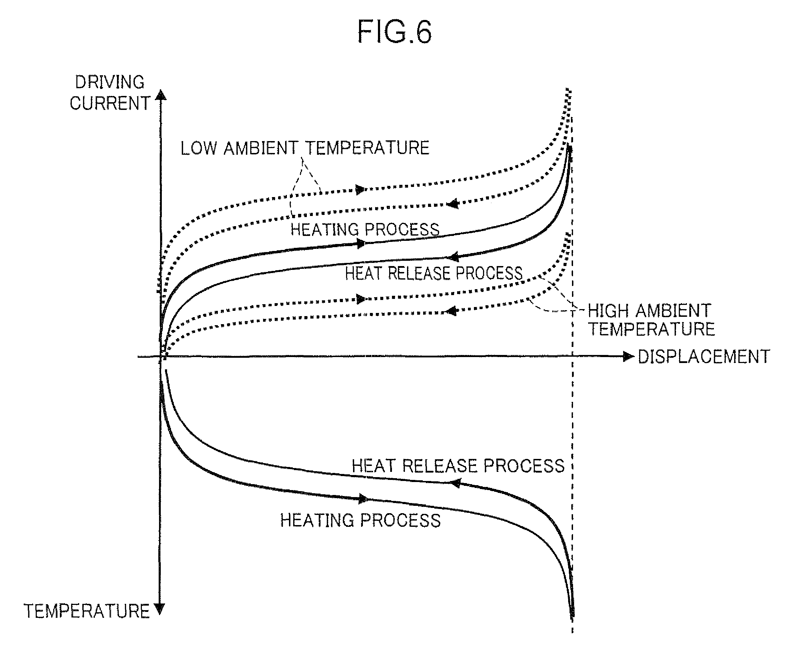

Fig. 6 illustrates a displacement - driving current (ambient temperature) characteristic and a displacement - temperature characteristic of a SMA. The temperature of the SMA can be modified through generation of Joule heat elicited by a driving current. Therefore, the SMA exhibits fundamentally a hysteresis characteristic identical to the displacement - temperature characteristic of Figs. 3 and 4 above. However, the temperature of the SMA is affected by ambient temperature, and hence the displacement - driving current characteristic varies depending on the ambient temperature (depends on the ambient temperature). When the ambient temperature is high, the driving current is small for a same displacement, and when the ambient temperature is low, the driving current is large for a same displacement. In order to control the displacement of the SMA actuator 11, therefore, the driving current must be appropriately controlled in accordance with such a characteristic.

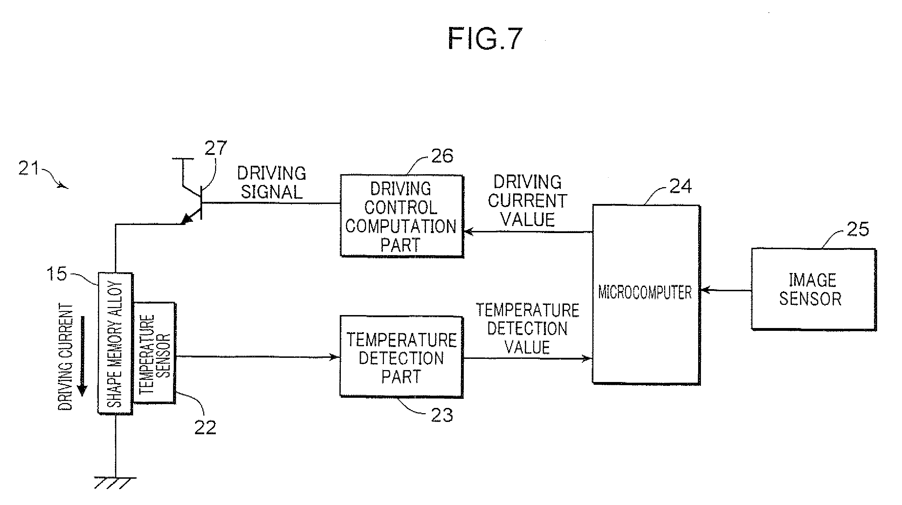

Thus, Fig. 7 illustrates a block diagram of a control circuit 21 that is a first drive device for driving the SMA actuator 11. The control circuit 21 comprises a temperature sensor 22, a temperature detection part 23, a microcomputer 24, an image sensor 25, a driving control computation part 26 and a driving element 27. The control circuit 21 controls, by way of the driving element 27, the driving current that flows in the SMA 15. In the control circuit 21, temperature is used as the parameter that relates to expansion and contraction of the SMA 15, i.e. as the parameter for detecting the position of the lens barrel 4. Therefore, the temperature sensor 22 that constitutes a measurement part is disposed in the vicinity of the SMA 15, such that the output of the temperature sensor 22 is detected by the temperature detection part 23 and is inputted, in the form of a temperature detection value, to the microcomputer 24. The temperature sensor 22 comprises, for instance, a thermistor, a thermocouple, a thin-film resistor or the like, and is provided in the lever 13 at a portion of the cutout 13a around which the SMA 15 is wrapped.

The detection result of the image sensor 25 is inputted to the microcomputer 24. On the basis of the output of the image sensor 25, the microcomputer 24 determines the presence of a focus point upon detection of an edge at which contrast becomes high. Therefore, the microcomputer 24 constitutes a control part as well as a detection part that detects that the lens barrel 4 has reached a target displacement position. The microcomputer 24 computes a driving current value in response to the output of the image sensor 25 and the output of the temperature sensor 22, and supplies the results to the driving control computation part 26. The driving control computation part 26 creates a duty driving signal according to the driving current value, and controls the energization current value (current value of the driving current) of the SMA 15 by way of the driving element 27. Accordingly, a memory of the microcomputer 24 has stored therein a relationship between driving current, ambient temperature and displacement, such as the one illustrated in Fig. 6 above, in such a way so as allow appropriately setting the energization current value (duty) in accordance with a heating / heat release process and the ambient temperature. In order to measure the ambient temperature, there may be provided a separate temperature sensor, other than the temperature sensor 22 that detects the temperature of the SMA 15. Alternatively, the microcomputer 24 may be configured in such a manner that the detection result of the temperature sensor 22 is read upon start of energization of the SMA 15, and/or upon a pause of energization for a predefined time, given that, ordinarily, ambient temperature does not charge abruptly.

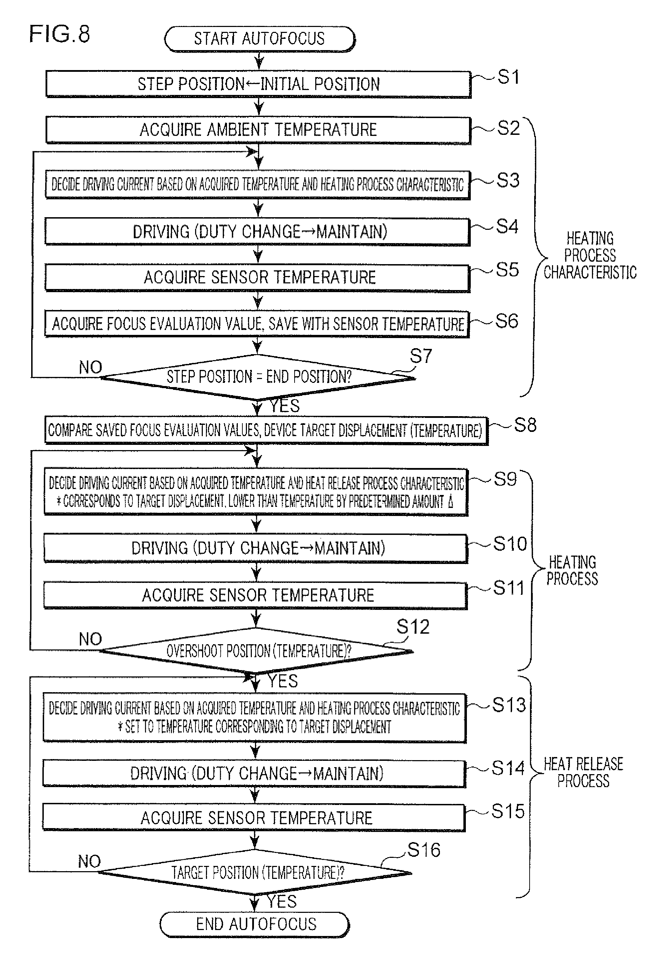

Fig. 8 is a flowchart for explaining autofocus control by the control circuit 21. In Fig. 8 there is performed a focus position search in a heating process such as the one illustrated in Fig. 3 above. Upon start of the autofocus process, the microcomputer 24 firstly sets, in step S1, the initial position at which the focus position search starts, as an initial step position (position on the base portion 6 of Fig. 2). In step S2, the microcomputer 24 acquires the ambient temperature by way of the temperature sensor 22, via the temperature detection part 23. In step S3, the microcomputer 24 decides a driving current value for causing a lens to move to a next step position, on the basis of the acquired temperature information and on the basis of a displacement - driving current characteristic of the heating process that is stored beforehand. The microcomputer 24 outputs the decided driving current value to the driving control computation part 26.

In step S4, the driving control computation part 26 drives the SMA 15, via the driving element 27, at the abovementioned driving current value. After a given time has elapsed, to allow for a required response time for the motion of the lens barrel 4, the microcomputer 24 acquires, in step S5, the temperature of the SMA 15 by the temperature sensor 22, via the temperature detection part 23. In step S6, the microcomputer 24 performs focus evaluation on the basis of, for instance, contrast at that step position, and stores the result together with the temperature of the SMA 15 of step S5. In step S7, the microcomputer 24 determines whether or not the present step position is an end position of the focus search. If not, the process returns to the above-described step S3, in order to change to a next step position. If, on the other hand, the microcomputer 24 determines that the step position is the end position, on the basis of, for instance, the amount of defocus in the focus evaluation, the microcomputer 24 terminates the heating process as the focus position search, and, in step S8, sets the step position having a highest value, from among the held focus evaluation values, as an optimal focus position (target position) and sets the temperature at that step position to the target temperature.

The various steps starting from step S8 above are processes of an operation of moving to the target position. Firstly, the microcomputer 24 starts a heat release process from step S9. In step S9, the microcomputer 24 decides a driving current value, on the basis of the ambient temperature obtained in step S2 and a displacement - driving current characteristic of a heat release process, stored beforehand, in such a manner that the target position is overshot by the predefined value Δ, at a lower temperature than a temperature corresponding to the target displacement. The microcomputer 24 drives then the SMA 15 in step S10, in the same way as in step S4. In step S11, the microcomputer 24 measures the temperature of the SMA 15 in the same way as in step S5, and in step S12, decides whether or not the temperature has reached the temperature of the overshoot position set in step S9. If not, the process returns to step S9 above. If yes, the heat release process is terminated, and the process moves on to a re-heating process from step S13 onwards.

In step S13, in the same way as in step S3, the microcomputer 24 decides a driving current value corresponding to the target position, on the basis of the ambient temperature obtained in step S2 and on the basis of a displacement - driving current characteristic of the heating process stored beforehand. The microcomputer 24 drives then the SMA 15 in step S14, in the same way as in step S4. In step S15, the microcomputer 24 measures the temperature of the SMA 15 in the same way as in step S5, and in step S16, decides whether or not the temperature has reached the temperature of the overshoot position set in step S13. If not, the process returns to step S13 above. If yes, the microcomputer 24 maintains the temperature, terminates the re-heating process, and moves on to an imaging operation.

In the flow of Fig. 8, the focus position search is performed in the heating process illustrated in Fig. 3. In a case of focus position search in the heat release process illustrated in Fig. 4, the autofocus process can be carried out according to the same process, except that now the above-described relationship of the heating / heat release process and the temperature high/low relationship are reversed.

In the control circuit 21 of the present embodiment, thus, the microcomputer 24 sweeps the value of energization current to the SMA 15 in one direction over a range defined beforehand, such that, upon detection that the microcomputer 24 has passed a target position on account of the resulting displacement of the moving part, the microcomputer 24 reads the measurement result of the temperature sensor 22, at that point in time, as a target temperature corresponding to the target position. To re-position the moving part to the target position through a change in the energization current by the driving element 27 to the other direction, in such a way so as reach the above-mentioned above target temperature, the microcomputer 24 sets, as shown in Fig. 5, the energization current value to a value offset by an overshoot amount Δ corresponding to the amount of hysteresis in the temperature - distortion characteristic of the SMA 15, and, from the point in time at which the set value is obtained, the microcomputer 24 changes again the energization current value to the above-mentioned one direction, to reach the target position (temperature). Accordingly, the control circuit 21 of the present embodiment allows realizing accurate position control in a shorter time than in a method in which motion to the target position is performed after the crystal phase has returned temporarily to a martensitic phase (low-temperature phase), as in the conventional case illustrated in Fig. 12.

A preferred composition of the SMA 15 is a Ni (nickel) - Ti (titanium) - Cu (copper) ternary system comprising 3 at% or more of Cu. That is because in a binary material of Ni-Ti alloy, the temperature hysteresis is of about 20°C, but of about 10°C in a material of the above-mentioned Ni-Ti-Cu alloy ternary system. The temperature hysteresis can thus be kept small. Time losses incurred on account of the heating / heat release process can thus be cut by reducing the above-described temperature hysteresis.

### Embodiment 2

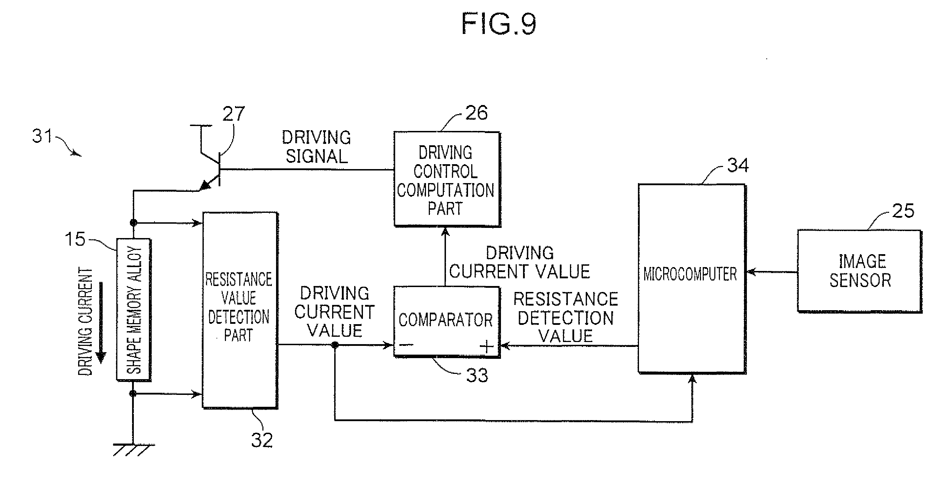

Fig. 9 is a block diagram illustrating the electric configuration of a control circuit 31 being a second drive device for driving the SMA actuator 11. The control circuit 31 comprises a resistance value detection part 32, a comparator 33, a microcomputer 34, an image sensor 25, a driving control computation part 26 and a driving element 27. The control circuit 31 controls the driving current that flows in the SMA 15 by way of the driving element 27. The control circuit 31 is similar to the above-described control circuit 21, and hence corresponding features will be denoted with the same reference numerals, and a recurrent explanation thereof will be omitted. In the present embodiment 2, the control circuit 31 uses a resistance value of the SMA 15 as a parameter relating to expansion and contraction of the SMA 15, i.e. as a parameter for detecting the position of the lens barrel 4. To that end, the resistance value detection part 32 detects the resistance across the electrodes 16 of the SMA 15, the comparator 33 compares the detection result with a target resistance value given by the microcomputer 34, and the driving current value is set in accordance with the compilation result.

As described above, the driving current that flows from the above-described driving element 27 to the SMA 15 is a constant current the duty whereof changes according to the target position. As a result, the resistance value detection part 32 can work out the resistance value on the basis of a known constant current value during a period of ON duty, and on the basis of the voltage across the electrodes 16 of the SMA 15. Alternatively, the resistance value detection part 32 causes a known search current to flow in the SMA 15 during an OFF duty period at which the driving element 27 is off and the driving current is not flowing. The above-mentioned resistance value can then be worked out on the basis of the voltage across the electrodes 16 of the SMA 15 that arises from the search current.

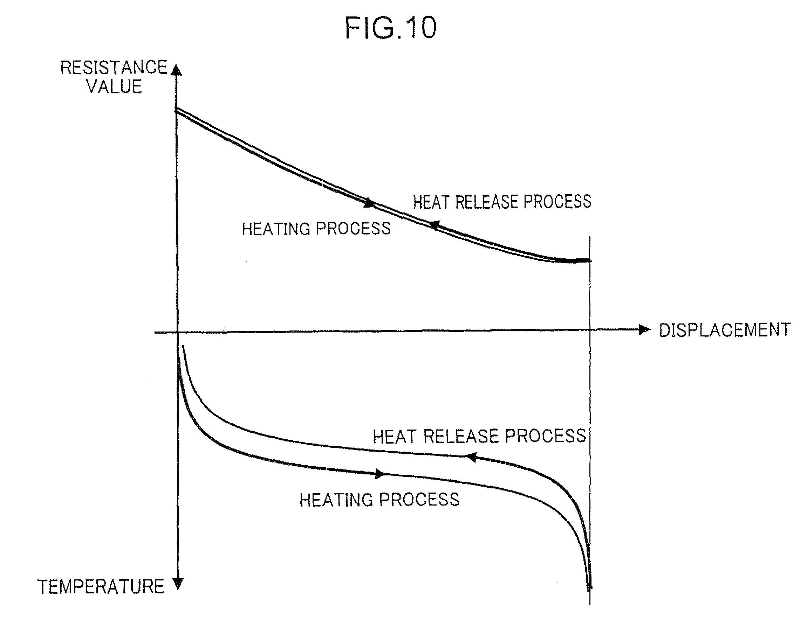

Fig. 10 illustrates that displacement - resistance value characteristic and a displacement - temperature characteristic of an SMA. The resistance value of an SMA varies depending on the displacement, due to the influence of changes in the crystal phase of the SMA and expansion and contraction of the SMA. The displacement - resistance value characteristic has a smaller hysteresis than a temperature - displacement characteristic such as the one illustrated in Fig. 6 above, and is fundamentally not affected by ambient temperature. Therefore, the predefined value Δ of the above-mentioned overshoot can be reduced in a case where feedback control of the driving current is performed using such a resistance value. Thus, positions can be detected in the same way as described above by using a resistance value - distortion characteristic of the SMA 15, without using any means for directly learning the temperature. A relationship between a target resistance value and displacement is stored beforehand in the microcomputer 34.

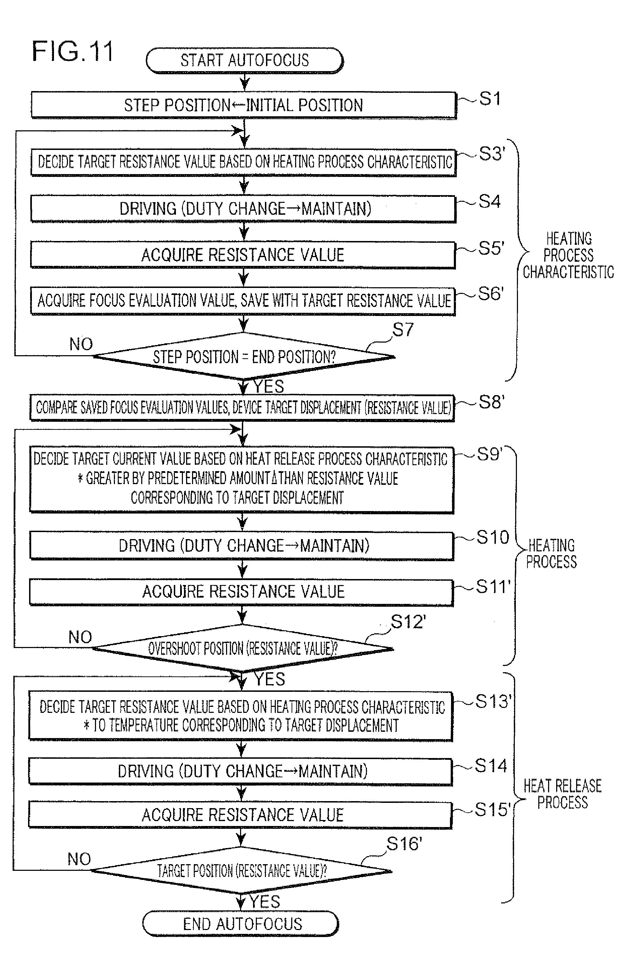

Fig. 11 is a flowchart for explaining autofocus control by the control circuit 31. The operation in Fig. 11 is similar to that of Fig. 8 above, and hence identical operations will be denoted with the same step number, while similar operations will be denoted with the same step number with a prime ('). In the operation of Fig. 11 as well, a focus position is searched in a heating process. Upon start of the autofocus process, the microcomputer 34 firstly sets, in step S1, the initial position at which the focus position search starts, as an initial step position. In step S3', the microcomputer 34 decides a target resistance value for causing a lens to move to that step position, on the basis of a displacement - resistance value characteristic of the heating process stored beforehand, and sets the decided target resistance value in the comparator 33.

In step S4, the driving control computation part 26 drives the SMA 15, by way of the driving element 27, at a driving current value worked out by the comparator 33 on the basis of the set target resistance value and a present resistance value. After a given time has elapsed, to allow for a required response time for the motion of the lens barrel 4, the microcomputer 34 acquires, in step S5', the resistance value of the SMA 15 by the resistance value detection part 33. In step S6', the microcomputer 34 performs focus evaluation on the basis of, for instance, contrast at that step position, and stores the result together with the resistance value of the SMA 15 of step S5'. In step S7, the microcomputer 34 determines whether the current step position is or not an end position of the focus search. If not, the process returns to the above-described step S3', in order to change to a next step position. If, on the other hand, the microcomputer 34 determines that the step position is an end position, on the basis of, for instance, the amount of defocus in the focus evaluation, the microcomputer 34 terminates the heating process as the focus position search, and, in step S8', sets the step position having a highest value, from among the held focus evaluation values, as an optimal focus position (target position), and sets the resistance value at that step position as the target temperature.

The various steps starting from step S8' above are processes of an operation of moving to the target position. Firstly, the microcomputer 34 starts a heat release process from step S9'. In step S9', the microcomputer 34 decides a target resistance value being a resistance value greater than a resistance value corresponding to a target displacement, on the basis of the displacement - resistance value characteristic of a heat release process, stored beforehand, in such a manner that the position overshoots the target position by the predefined value Δ. In step S10, the comparator 33 generates a driving current value to drive thereby the SMA 15, in the same way as in step S4. In step S11', the microcomputer 34 measures the resistance value of the SMA 15 in the same way as in step S5', and in step S12', decides whether or not the resistance value has reached the target resistance value of the overshoot position set in step S9'. If not, the process returns to step S9' above. If yes, the heat release process is terminated, and the process moves on to a re-heating process from step S13' onwards.

In step S13', in the same way as in step S3', the microcomputer 34 decides a target resistance value corresponding to the target position, on the basis of the displacement - resistance value characteristic of a heating process stored beforehand. The microcomputer 34 drives then the SMA 15 in step S14', in the same way as in step S4. In step S15', the microcomputer 34 measures the resistance value of the SMA 15 in the same way as in step S5', and in step S16', decides whether or not the resistance value has reached the target resistance value of the target position set in step S13'. If not, the process returns to step S13' above. If yes, the microcomputer 34 maintains the resistance value, terminates the re-heating process, and moves on to an imaging operation.

A configuration such as the above allows realizing accurate position control, in a short time, on the basis of the resistance value of the SMA 15.

The present description discloses various technical features as described above. The main technical features involved are summarized as follows.

A shape memory alloy actuator drive device according to one aspect is a shape memory alloy actuator drive device that drives a shape memory alloy actuator having a shape memory alloy that expands and contracts on account of heat generated through energization and that exhibits hysteresis in a parameter-distortion characteristic relating to the expansion and contraction, and a moving part that is displaced by being driven on account of the expansion and contraction, the shape memory alloy actuator drive device further having: a driving circuit that performs the energization of the shape memory alloy; a measurement part that measures a parameter relating to the expansion and contraction of the shape memory alloy; a target displacement position detection part that detects a target displacement position of the moving part; and a control part that controls an value of energization current to the shape memory alloy by the driving circuit in response to an output from the measurement part and from the target displacement position detection part; wherein the control part causes the moving part to be displaced in one direction through sweeping of an increase and decrease of the energization current value, in one direction, in the driving circuit when during this time the target displacement position detection part detects that the target displacement position has been passed, the control part reads a measurement result of the measurement part, at that point in time, as a target parameter, sets the target parameter to a value offset by an overshoot amount that corresponds to an hysteresis amount of a parameter-distortion characteristic that relates to the expansion and contraction, upon causing the moving part to move in another direction by changing the increase and decrease of the energization current value by the driving circuit to be in another direction, and changes again the increase and decrease of the energization current value to be in the one direction, from a point in time at which the set value is obtained, in order to cause thereby the moving part to move in the one direction and be re-positioned to the target displacement position according to the target parameter.

In such a configuration, a shape memory alloy actuator comprises a moving part that is displaced by being driven on account of expansion and contraction of a shape memory alloy that expands and contracts on account of heat generated through energization and that exhibits hysteresis in a temperature - distortion characteristic and/or a resistance value-distortion characteristic. Accordingly, the shape memory alloy actuator drive device comprises a driving circuit that performs the energization of the shape memory alloy; a measurement part that measures a parameter of the shape memory alloy, for instance the temperature or a resistance value, relating to the expansion and contraction ; a target displacement position detection part that detects a target displacement position of the moving part; and a control part that controls an value of energization current to the shape memory alloy by the driving circuit in response to an output from the measurement part and from the target displacement position detection part; the control part causes the moving part to be displaced along one branch of a hysteresis loop, through sweeping of the energization current value in one direction, over a range established beforehand; when during this time the target displacement position detection part detects that the target displacement position has been passed, the control part reads a measurement result of the measurement part, at that point in time, as a target parameter; and changes the energization current value by the driving circuit to another direction, in such a way so as to reach the target parameter, to move thereby along the other branch of the hysteresis loop, and cause the moving part to be re-positioned at the target displacement position. If control is performed without taking the above hysteresis into account, an offset in the actual displacement position arises between an instance where one branch of the hysteresis loop is used and an instance where the other branch is used. To achieve accurate positioning, therefore, conventional control techniques resort to a method wherein shift to the target position (the above-mentioned temperature or resistance value) takes place after the crystal phase of the shape memory alloy has been temporarily returned to a martensitic phase (low-temperature phase). Such conventional techniques, however, require time for returning the crystal phase to the martensitic phase. Therefore, the control part in the above aspect causes the temperature to change up to substantially exceeding a hysteresis amount of a parameter (the temperature or resistance value) - distortion characteristic relating to expansion and contraction of the shape memory alloy, and performs thereafter the shift to the target position (temperature or resistance value).

As a result, the shape memory alloy actuator drive device having such a configuration allows realizing accurate position control in a shorter time.

In another aspect of the above-described shape memory alloy actuator drive device, preferably, the parameter relating to the expansion and contraction of the shape memory alloy is temperature.

Such a configuration allows controlling the expansion and contraction of the shape memory alloy, and controlling the position of the moving part of the shape memory alloy actuator, on the basis of temperature.

In another aspect of the above-described shape memory alloy actuator drive device, preferably, the parameter relating to the expansion and contraction of the shape memory alloy is a resistance value.

Such a configuration allows controlling the expansion and contraction of the shape memory alloy, and controlling the position of the moving part of the shape memory alloy actuator, on the basis of temperature.

In another aspect of the above-described shape memory alloy actuator drive devices, preferably, the composition of the shape memory alloy is a Ni-Ti-Cu ternary system including 3 at% or more of Cu.

In such a configuration, the temperature hysteresis can be kept small, since the temperature hysteresis of the Nz-Ti-Cu alloy is about 10°C versus that of about 20°C in a Ni-Ti alloy.

An imaging device according to another aspect uses any one of the above-described shape memory alloy actuator drive devices.

In such a configuration, the imaging device can realize autofocus quickly through the use of any one of the above-described shape memory alloy actuator drive devices for focus lens driving control.

The present application is based on Japanese Patent Application No. 2008-327146, filed December 24, 2008, the contents whereof have been incorporated herein by reference.

The present invention has been appropriately and sufficiently explained, by way of the above embodiments with reference to accompanying drawings, so as to allow realizing the invention. However, it should be noted that a person skilled in the art could easily conceive of variations and/or improvements of the above-described embodiments. Therefore, any variations or improvements that a person skilled in the art could conceive of are meant to lie within the scope of the claims, provided that such variations or improvements do not depart from the scope of the claims.

### Industrial Applicability

The present invention succeeds in providing a drive device and imaging device that utilize a shape memory alloy.

## Claims

1. A shape memory alloy actuator drive device that drives a shape memory alloy actuator having a shape memory alloy that expands and contracts on account of heat generated through energization and that exhibits hysteresis in a parameter-distortion characteristic relating to the expansion and contraction, and a moving part that is displaced by being driven on account of the expansion and contraction,
the shape memory alloy actuator drive device further having:
a driving circuit that performs the energization of the shape memory alloy;
a measurement part that measures a parameter relating to the expansion and contraction of the shape memory alloy;
a target displacement position detection part that detects a target displacement position of the moving part; and
a control part that controls an value of energization current to the shape memory alloy by the driving circuit in response to an output from the measurement part and from the target displacement position detection part, wherein
the control part causes the moving part to be displaced in one direction through sweeping of an increase and decrease of the energization current value, in one direction, in the driving circuit when during this time the target displacement position detection part detects that the target displacement position has been passed, the control part reads a measurement result of the measurement part, at that point in time, as a target parameter, sets the target parameter to a value offset by an overshoot amount that corresponds to an hysteresis amount of a parameter-distortion characteristic that relates to the expansion and contraction, upon causing the moving part to move in another direction by changing the increase and decrease of the energization current value by the driving circuit to be in another direction, and changes again the increase and decrease of the energization current value to be in the one direction, from a point in time at which the set value is obtained, in order to cause thereby the moving part to move in the one direction and be re-positioned to the target displacement position according to the target parameter.

2. The shape memory alloy actuator drive device according to claim 1, wherein the parameter relating to the expansion and contraction of the shape memory alloy is temperature.

3. The shape memory alloy actuator drive device according to claim 1, wherein the parameter relating to the expansion and contraction of the shape memory alloy is a resistance value.

4. The shape memory alloy actuator drive device according to claim 1, wherein the composition of the shape memory alloy is a Ni-Ti-Cu ternary system including 3 at% or more of Cu.

5. An imaging device, using the shape memory alloy actuator drive device according to claim 1.

6. A shape memory alloy actuator driving method for driving a shape memory alloy actuator having a shape memory alloy that expands and contracts on account of heat generated through energization and that exhibits hysteresis in a parameter-distortion characteristic relating to the expansion and contraction, and a moving part that is displaced by being driven on account of the expansion and contraction,
the shape memory alloy actuator driving method comprising:
a step of causing the moving part to be displaced in one direction through sweeping of an increase and decrease of the energization current value, in one direction, in the driving circuit;
a step of reading, upon detecting, during the time at which the moving part is being displaced in the one direction, that the moving part has passed the target displacement position, a parameter value relating to the expansion and contraction of the shape memory alloy at that point in time, as a target parameter;
a step of setting the target parameter to a value offset by an overshoot amount that corresponds to an hysteresis amount of a parameter-distortion characteristic that relates to the expansion and contraction, upon causing the moving part to move in another direction by changing the increase and decrease of the energization current value to be in another direction; and
a step of, while the moving part is being displaced in the other direction, changing again the increase and decrease of the energization current value to be in the one direction, from a point in time at which the value set in the step is obtained, in order to cause thereby the moving part to move in the one direction and be re-positioned to the target displacement position according to the target parameter.
